# EUROPEAN PATENT APPLICATION

(11) **EP 4 487 711 A1**
(43) Date of publication of application: **08.01.2025**
(21) Application number: 23787857.4
(22) Date of filing: 17.04.2023
(51) Int. Cl.: A24F 40/40, A24F 40/46, A24F 40/51, A24F 47/00

(54) **HEATER, HEATING ASSEMBLY, HEATING MODULE, AND AEROSOL GENERATING DEVICE**

(30) Priority: 16.04.2022 CN 202220879035 U; 16.04.2022 CN 202220879040 U; 16.04.2022 CN 202220879053 U; 16.04.2022 CN 202220879062 U
(71) Applicant: Shenzhen First Union Technology Co., Ltd., Shenzhen, Guangdong 518000 (CN)
(72) Inventor: WU, Tao, Shenzhen, Guangdong 518000 (CN); ZHENG, Wen, Shenzhen, Guangdong 518000 (CN); QI, Zuqiang, Shenzhen, Guangdong 518000 (CN); XU, Zhongli, Shenzhen, Guangdong 518000 (CN); LI, Yonghai, Shenzhen, Guangdong 518000 (CN)
(74) Representative: Ran, Handong
(86) International application number: PCT/CN2023/088660
(87) International publication number: WO 2023/198215

(57) **Abstract**

The present application relates to a heater, a heating assembly, a heating module, and an aerosol generating device. The heater comprises: a base, a plurality of air holes running through the base, the first air holes allowing for passing of air, the air being heated by the base when flowing through the first air holes, and a mounting hole being further formed in the base; and a first temperature sensor, a measurement portion thereof being disposed in the mounting hole to measure the temperature inside the base.

## Description

### CROSS-REFERENCE TO RELATED APPLICATIONS

This application claims priorities to
Chinese Patent Application No. 202220879035.7, filed with the China National Intellectual Property Administration on April 16, 2022 and entitled "HEATING MODULE AND AEROSOL GENERATING DEVICE",
Chinese Patent Application No. 202220879040.8, filed with the China National Intellectual Property Administration on April 16, 2022 and entitled "HEATING ASSEMBLY AND AEROSOL GENERATING DEVICE",
Chinese Patent Application No. 202220879053.5, filed with the China National Intellectual Property Administration on April 16, 2022 and entitled "HEATING ASSEMBLY AND AEROSOL GENERATING DEVICE", and
Chinese Patent Application No. 202220879062.4, filed with the China National Intellectual Property Administration on April 16, 2022 and entitled "HEATER AND AEROSOL GENERATING DEVICE",
which are incorporated herein by reference in their entireties.

### TECHNICAL FIELD

This application relates to the field of aerosol generating technologies, and in particular, to a heater, a heating assembly, a heating module, and an aerosol generating device.

### BACKGROUND

An aerosol generating device generally includes a heater. The heater is configured to heat an aerosol generation product to generate an aerosol.

An air heater can heat air flowing therethrough to form high-temperature air. The high-temperature air enters the aerosol generation product, and bakes aerosol generation product during contact with the aerosol generation product, to cause the aerosol generation product to generate a volatile that forms a volatile aerosol.

To control a temperature of air heating, a temperature of a temperature heater needs to be measured.

### SUMMARY

Embodiments of this application provide a heater, a heating assembly, a heating module, and an aerosol generating device. A measurement portion of a first temperature sensor is arranged in a heater to measure an internal temperature of the heater, which helps control the temperature of the heater.

The heater provided in the embodiments of this application is configured to heat air flowing therethrough, so as to heat an aerosol generation product through hot air. The heater includes:
a base body, where a plurality of first air holes run through the base body, the first air holes allow air to pass through, and the air is heated by the base body when flowing through the first air holes;
a mounting hole, provided in the base body; and
a first temperature sensor, where a measurement portion thereof is arranged in the mounting hole to measure a temperature inside the base body.

The heating assembly provided in the embodiments of this application includes a tubular member and the heater. The heater includes a fixing portion arranged on at least part of a side surface of the base body, and the base body is embedded in and connected to the tubular member through the fixing portion.

The heating module provided in the embodiments of this application includes:
a thermal insulation housing, having a first accommodating cavity formed therein, where the first accommodating cavity is configured to accommodate at least part of an aerosol generation product, and a first insertion port in communication with the first accommodating cavity is provided on a proximal end of the thermal insulation housing; and
the heating assembly, arranged in the first accommodating cavity and configured to heat the aerosol generation product to generate an aerosol.

A distal end of the thermal insulation housing is sealed.

The aerosol generating device provided in the embodiments of this application includes the heater, the heating assembly, or the heating module.

According to the heater, the heating assembly, the heating module, and the aerosol generating device described above, the measurement portion of the first temperature sensor is arranged in the mounting hole, to achieve arrangement of the measurement portion in the base body, so that the first temperature sensor can measure a temperature change inside the base body. Compared with measuring a temperature of a surface of the base body, measuring the temperature inside the base body not only can reduce a measurement error caused by a temperature gradient between the surface of the base body and inside of the base body, but also avoid impact of a thermal insulation layer arranged on a periphery of the heater. Specifically, since the measurement portion is arranged in the mounting hole, when air flows through the first air holes, the temperature inside the base body decreases. In particular, when an air flow velocity and an air flow rate significantly increase due to frequent inhalations of a user, the measurement portion can measure sensitively in real time the temperature change of the base body caused by the airflow change, thereby providing a more accurate and timely temperature parameter. In addition, arranging the measurement portion in the mounting hole significantly helps control the temperature of the aerosol generating device.

### BRIEF DESCRIPTION OF THE DRAWINGS

One or more embodiments are exemplarily described with reference to figures in drawings corresponding to the embodiments, but the exemplary descriptions do not constitute a limitation on the embodiments. Elements in the drawings having same reference numerals represent similar elements. Unless otherwise particularly stated, the figures in the drawings are not drawn to scale.
FIG. 1 is a schematic diagram of an aerosol generating device according to an embodiment of this application.
FIG. 2 is a partial schematic diagram of the aerosol generating device according to an embodiment of this application.
FIG. 3 is a schematic diagram of a heater according to an embodiment of this application.
FIG. 4 is another schematic diagram of the heater according to an embodiment of this application.
FIG. 5 is still another schematic diagram of the heater according to an embodiment of this application.
FIG. 6 is a schematic diagram of the heater according to another embodiment of this application.
FIG. 7 is a schematic diagram of the heater according to till another embodiment of this application.
FIG. 8 is a three-dimensional sectional view of the heater according to an embodiment of this application.
FIG. 9 is a schematic diagram of the heater according to till another embodiment of this application.
FIG. 10 is a partial schematic diagram of the aerosol generating device according to another embodiment of this application.
FIG. 11 is a schematic diagram of the heater according to till another embodiment of this application.
FIG. 12 is a three-dimensional sectional view of a heating assembly according to an embodiment of this application.
FIG. 13 is a three-dimensional sectional view of the heating assembly according to another embodiment of this application.
FIG. 14 is a three-dimensional sectional view of a heating module according to an embodiment of this application.
FIG. 15 is a three-dimensional sectional view of the heating assembly according to an embodiment of this application.

In the drawings:
1. Aerosol generation product;
2. Housing; 21. Mounting cavity;
3. Heater; 31. Base body; 311. First surface; 32. Fixing portion; 33. First air hole; 341. Groove; 342. Second air hole; 35. First temperature sensor; 351. First thermocouple wire; 352. Second thermocouple wire; 36. Mounting hole; 37. First portion; 38. Second portion; 39. Third air hole;
4. Power source; 41. Battery core; 42. Controller;
5. Magnetic field generator;
6. Tubular member; 61. Receiving cavity;
7. Auxiliary heating member;
8. Thermal insulation housing; 81. First accommodating cavity; 82. Arched bottom; 83. Convex air cavity;
9. Support; 91. Second insertion port; 92. Shoulder; 921. First air vent; 93. Second air vent; 101. Shielding layer; 102. Second temperature sensor.

### DETAILED DESCRIPTION

Technical solutions in embodiments of this application are clearly and completely described below with reference to drawings in the embodiments of this application. Apparently, the described embodiments are merely some rather than all of the embodiments of this application. All other embodiments obtained by a person of ordinary skill in the art based on the embodiments of this application without creative efforts fall within the protection scope of this application.

Terms "first", "second", and "third" in this application are merely used for description, and cannot be understood as indicating or implying relative importance or implying a quantity or order of indicated technical features. All directional indications (for example, up, down, left, right, front, and back) in the embodiments of this application are merely used for explaining relative position relationships, movement situations, or the like among various components in a specific posture (shown in the drawings). If the specific posture changes, the directional indications change accordingly. In addition, terms "include", "have", and any variant thereof are intended to cover a non-exclusive inclusion. For example, a process, a method, a system, a product, or a device that includes a series of steps or units is not limited to the listed steps or units, and instead, optionally further includes a step or a unit that is not listed, or optionally further includes another step or unit that is intrinsic to the process, the method, the product, or the device.

"An embodiment" mentioned in the specification means that particular features, structures, or characteristics described with reference to the embodiment may be included in at least one embodiment of this application. The phrase appearing at various locations in this specification unnecessarily indicates a same embodiment or an independent or alternative embodiment exclusive to another embodiment. A person skilled in the art explicitly or implicitly understands that the embodiments described in the specification may be combined with other embodiments.

It should be noted that, when an element is referred to as "being fixed to" another element, the element may be directly located on the another element, or an intermediate element may exist. When an element is considered to be "connected to" another element, the element may be directly connected to the another element, or one or more intermediate elements may simultaneously exist between the element and the another element. Terms "vertical", "horizontal", "left", and "right" and similar expressions used in this specification are merely used for illustration and do not indicate a unique implementation.

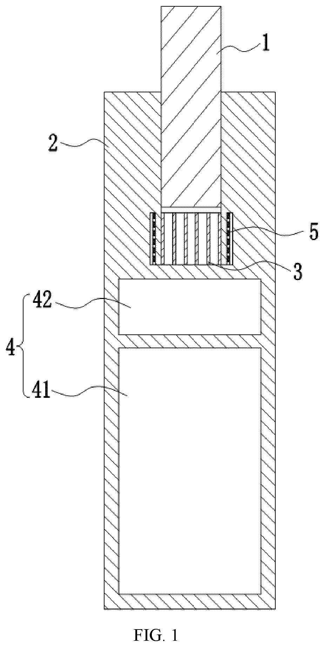

An embodiment of this application provides an aerosol generating device. The device may be configured to heat an aerosol generation product, so that the aerosol generation product volatilizes to generate an aerosol for inhalation. The aerosol may include a Chinese herb, nicotine, or flavoring substances such as tobacco and slice. In the embodiment shown in FIG. 1, an aerosol generation product 1 is a smoking product (such as a cigarette or a cigar), which is not limited.

In the embodiment shown in FIG. 1, the aerosol generating device includes a receiving cavity configured to receive the aerosol generation product 1 and a heater 3 configured to heat the aerosol generation product 1, and further includes a power source 4. The power source 4 is configured to provide power for operation of the heater 3.

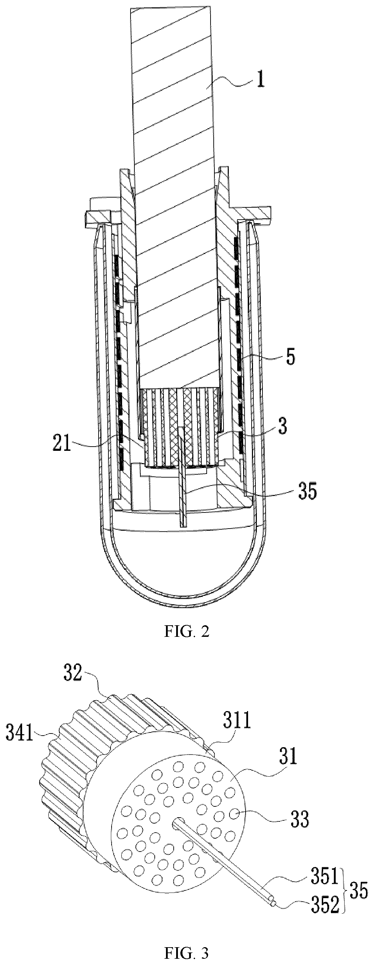

Referring to FIG. 1 and FIG. 2, the aerosol generating device is provided with an insertion port. The aerosol generation product 1, for example, a cigarette, is removably received in the receiving cavity through the insertion port. The heater 3 at least partially extends in a longitudinal direction in the receiving cavity, and generates heat through electromagnetic induction in a varying magnetic field, or generates heat through a resistor when energized, or radiates an infrared ray to the aerosol generation product when excited, so as to heat the aerosol generation product 1, for example, a cigarette, to cause at least one component of the aerosol generation product 1 to volatilize to form an aerosol for inhalation. The power source includes a battery core 41. The battery core 41 is a rechargeable direct current battery core that can output a direct current. In another embodiment, the battery core 41 may be a disposable battery that cannot be charged or does not need to be charged. In another implementation, the power source 4 may be a wired power source. The wired power source is directly connected to a mains power through a plug to supply power to the aerosol generating device.

In a preferred embodiment, a direct current supply voltage provided by the battery core 41 ranges from about 2.5V to about 9.0V, and an amperage of the direct current the battery core 41 can provide ranges from about 2.5 A to about 20A.

A power may be supplied to the heater 3 as a pulse signal. A magnitude of the power transmitted to the heater 3 may be adjusted by changing a duty cycle, a pulse width, or a pulse amplitude of the power signal.

The aerosol generating device may include a single heater 3. Alternatively, the aerosol generating device may include more than one heater 3. The heater 3 or the plurality of heaters 3 may be properly arranged to heat the aerosol generation product 1 most effectively. The plurality of heaters 3 may be configured to heat an aerosol generation product section by section. At least two of the plurality of heaters 3 may have different heating modes or heating efficiencies.

The heater 3 may heat the aerosol generation product 1 through conduction. The heater 3 may at least partially be in contact with the aerosol generation product 1 or a carrier of the aerosol generation product 1. Alternatively, heat from the heater 3 may be conducted to the aerosol generation product 1 through a thermally conductive element.

At least one heater 3 may heat the aerosol generation product 1 through convection. Alternatively, ambient air may be heated by at least one heater 3 before passing through the aerosol generation product 1. Alternatively, the heater 3 may heat the aerosol generation product 1 through radiation.

In an embodiment, one or more heaters 3 may be arranged. The power is supplied to the heaters 3 until one or more heaters 3 reach a temperature between about 150°C and 440°C, so that the aerosol generation product 1 generates an aerosol.

The aerosol generating device is preferably a hand-held aerosol generating device.

In addition, the aerosol generating device includes a controller 42, an insertion detector, and a user interface (such as a graphic display or a combination of LED indicators) configured to transmit information about the aerosol generating device to a user.

The insertion detector may detect existence and characteristics of the aerosol generation product 1 close to the heater 3 on a heat transfer path, and send a signal indicating the existence of the aerosol generation product 1 to the controller 42. It may be understood that the insertion detector is optional rather than mandatory.

The controller 42 controls the user interface to display system information such as a battery core power, a temperature, a status of the aerosol generation product 1, a number of puffs, other information, or a combination thereof.

The controller 42 is electrically connected to the power source and the heater 3, and is configured to control output of a current, a voltage, or an electric power of the power source, and the like, so as to control a temperature of the heater 3.

The controller 42 may include a programmable microprocessor. In another embodiment, the controller 42 may include a dedicated electronic chip, such as a field programmable gate array (FPGA) or an application specific integrated circuit (ASIC). In general, any device that can provide a signal that can control the heater may be used with the embodiments discussed herein. In an embodiment, the controller 42 is configured to measure a temperature change of an actual temperature of the heater 3 relative to a target temperature, to detect an event indicating a user inhalation.

The controller 42 may include a storage assembly. The storage assembly may include a memory and/or a buffer. The storage assembly may be configured to record a measured change in an airflow or a user inhalation. The storage assembly may record a number of user puffs or a time of each inhalation. The storage assembly may be further configured to record the temperature of the heater 3 and a power supplied during each inhalation. The recorded data may be displayed on the user interface through calling of the controller 42, or may be outputted and displayed through another output interface. When a recorded number of puffs reaches a preset total puff number of the aerosol generation product 1, the controller 42 may be reset, or the controller 42 may clear the recorded number of puffs, or the controller 42 controls the aerosol generating device to be turned off, or the controller 42 controls the battery core 41 to stop supplying power to the heater 3, or the controller 42 prompts the user that the aerosol generation product 1 reaches an inhalation limit through a sound, light, vibration, or the like.

User puffs may be useful for subsequent research and device maintenance and designing. The data about the number of user puffs may be transmitted to an external memory or a processing device through any suitable data output device. For example, the aerosol generating device may include radio, Bluetooth, or a universal serial bus (USB) slot connected to the controller or the memory. Alternatively, the aerosol generating device may be configured to transmit the data from the memory to an external memory in a battery core charging device each time the aerosol generating device is recharged through suitable data connection.

Further, in an optional implementation, the aerosol generation product 1 preferably adopts a tobacco-containing material that releases a volatile compound from an inhalable product when heated, or adopts a non-tobacco material configured to generate smoke through electric heating after being heated. The aerosol generation product 1 preferably adopts a solid substrate, which may include one or more of powder, particles, fragments, strips, or flakes of one or more of vanilla leaves, tobacco leaves, homogeneous tobacco, and expanded tobacco. Alternatively, the aerosol generation product 1 may include additional fragrant volatile tobacco or non-tobacco compounds to be released when the aerosol generation product 1 is heated. In some optional implementations, the aerosol generation product 1 is prepared in a shape of a conventional cigarette or cigar.

Further, in an optional implementation, the aerosol generation product 1 may be included in a smoke generating product. During operation, the smoke generating product including the aerosol generation product 1 may be fully included in the aerosol generating device. In this case, the user may inhale a mouthpiece of the aerosol generating device. The mouthpiece may be any part of the aerosol generating device that is placed in a mouth of the user to directly inhale the aerosol generated by the aerosol generation product 1 or the aerosol generating device. The aerosol is delivered to the mouth of the user through the mouthpiece. Alternatively, during operation, the smoke generating product including the aerosol generation product may be partially included in the aerosol generating device. In this case, the user may directly inhale a mouthpiece of the smoke generating product.

In an embodiment, reference may be made to FIG. 3 to FIG. 8. A heater 3 includes a base body 31. A plurality of first air holes 33 run through the base body 31, and the first air holes 33 allow air to pass through. The air may be heated into hot air by the base body 31 when passing through the first air holes 33. The hot air enters the aerosol generation product 1, and flows through almost all gaps in the aerosol generation product 1 to fully and uniformly bake the aerosol generation product 1.

In an embodiment, reference may be made to FIG. 3 to FIG. 8. The heater 3 may further include a fixing portion 32. The fixing portion 32 is arranged on a side surface of the base body 31. Air may flow through the fixing portion 32 and be heated into hot air when flowing through the fixing portion 32. The hot air enters the aerosol generation product 1, and then bakes the aerosol generation product 1 to generate an aerosol. Specifically, the heater 3 further includes an air channel. The air flows through the fixing portion 32 when flowing through the air channel.

In an embodiment, reference may be made to FIG. 2. The aerosol generating device further includes a housing 2. The foregoing receiving cavity configured to receive the aerosol generation product 1 is formed inside the housing 3. A mounting cavity 21 is further formed inside the housing 3. The fixing portion 32 is connected to at least part of a cavity wall of the mounting cavity 21, and is retained in the mounting cavity 21 through the connection. The base body 31 is retained in the mounting cavity 21 through connection to the fixing portion 32. Therefore, the fixing portion 32 may be further configured to retain the base body 31 in the housing 2.

In an embodiment, the heating member 3 includes stainless steel of grade 430 (SS430), stainless steel of grade 420 (SS420), an alloy material including iron and nickel (such as a permalloy), or a magnetically inductive material that can generate heat in a varying magnetic field, such as a graphite alloy. The heating member 3 generates heat by generating an eddy current and hysteresis in the varying magnetic field, and heats the air flowing therethrough, to heat the aerosol generation product 1 through the air. Correspondingly, the aerosol generating device further includes a magnetic field generator 5, such as an induction coil, which is configured to generate a varying magnetic field under an alternating current. The controller 42 is connected to the battery core 41 and the induction coil, and can convert a direct current outputted by the battery core 41 into an alternating current. Preferably, a frequency of the alternating current ranges from 80 KHz to 400 KHz. More specifically, the frequency may range from about 200 KHz to 300 KHz.

In a preferred embodiment, at least one of the base body 31 and the fixing portion 32 includes stainless steel of grade 430 (SS430), stainless steel of grade 420 (SS420), an alloy material including iron and nickel (such as a permalloy), or a magnetically inductive material that can generate heat in a varying magnetic field, such as a graphite alloy. Therefore, at least one of the base body 31 and the fixing portion 32 generates heat by generating an eddy current and hysteresis in the varying magnetic field, and heats the air flowing therethrough, to heat the aerosol generation product 1 through the air. Correspondingly, the aerosol generating device further includes a magnetic field generator 5, such as an induction coil, which is configured to generate a varying magnetic field under an alternating current. The controller 42 is connected to the battery core 41 and the induction coil, and can convert a direct current outputted by the battery core 41 into an alternating current. Preferably, a frequency of the alternating current ranges from 80 KHz to 400 KHz. More specifically, the frequency may range from about 200 KHz to 300 KHz.

In a preferred implementation, at least one of the base body 31 and the fixing portion 32 is made of a resistive conductive material such as an iron-chromium-aluminum alloy, a nickel-chromium alloy, a nickel-iron alloy, platinum, tungsten, silver, conductive ceramic, or a conductive material including at least one of the above, which can generate heat through an electrothermal effect of a resistor when energized, to heat the aerosol generation product 1, so that at least one component of the aerosol generation product 1 can volatilize to form an aerosol.

In a preferred implementation, the fixing portion 32 and the base body 31 of the heater 3 may be integrally formed from a same material. For example, the fixing portion and the base body are integrally formed from a magnetically inductive material such as graphite alloy powder.

In a preferred implementation, at least one of the base body 31 and the fixing portion 32 can generate heat. If only one of the base body 31 and the fixing portion 32 can generate heat, the other is heated up through heat transfer, to heat the air flowing therethrough.

In a preferred implementation, at least one of the base body 31 and the fixing portion 32 includes a heat conducting member and a heat generating member. The heat generating member may heat the heat conducting member by generating heating through an electrothermal effect, by generating heating through electromagnetic induction, or by infrared radiation. The heat conducting member is provided with the foregoing first air holes 33. Alternatively, air may flow through the heat conducting member, and the air may exchange heat with the heat conducting member when flowing through the heat conducting member so as to be heated into hot air. Specifically, at least part of the heating member may be arranged on a periphery of the heat conducting member. For example, the heating member is a resistive film, a heating wire, a magnetically inductive ring, a conductive ceramic ring, or the like arranged on an outer surface of the heat conducting member. In another embodiment, at least part of the heating member may be arranged inside the heat conducting member, for example, arranged on walls of the first air holes 33, so that the heating member may directly or indirectly heat the air flowing therethrough. In this embodiment, since the base body 31 is run through by one or more first air holes 33, the heat conducting member provided with the first air holes 33 is run through by the first air holes 33.

In a preferred implementation, the base body 31 and the fixing portion 32 are integrally formed from a same material. In this case, the base body 31 and the fixing portion 32 have a substantially same heating efficiency in a unit area or unit volume. In another embodiment, the base body 31 and the fixing portion 32 are integrally formed from different materials. In this case, the base body 31 and the fixing portion 32 have different heating efficiencies in unit area or unit volume. Therefore, a position of the fixing portion 32 may be set based on different temperature demands of air flowing through different sections, or the position of the fixing portion 32 may be set based on a heat dissipation trend of the heater 3 or the like. Certainly, there is a possibility that the fixing portion 32 and the base body 31 are separately formed and then connected to each other.

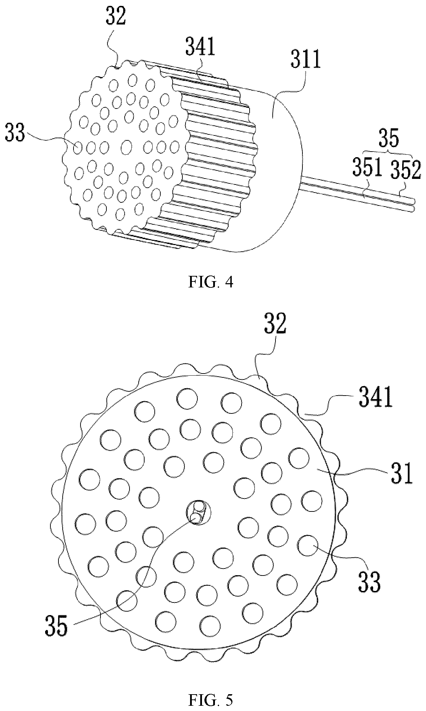

In an embodiment, reference may be made to FIG. 3 and FIG. 4. The side surface of the base body 31 includes a first surface 311 and a second surface. The first surface 311 and the second surface are distributed in an axial direction of the heater 3. In an air flowing direction, the second surface is located downstream from the first surface 311. The fixing portion 32 is arranged on the side surface of the base body 31. In an embodiment, the fixing portion 32 occupies only a partial area of the side surface of the base body 31. Specifically, the fixing portion 32 may be arranged on the first surface 311. Alternatively, the fixing portion 32 may be arranged on the second surface (as shown in FIG. 3 and FIG. 4). Alternatively, the fixing portion 32 is connected to the first surface 311 and the second surface, and occupies a part of the first surface 311 and a part of the second surface. Certainly, in another embodiment, the fixing portion 32 is connected to the first surface 311 and the second surface, and a length of the fixing portion 32 in the axial direction of the heater 2 may be not less than a sum of lengths of the first surface 311 and the second surface in the axial direction of the heater 3.

In some optional embodiments, the first surface 311 and the second surface both have a circular profile. In another optional embodiment, the first surface 311 may have a profile in a shape of a regular or irregular pattern such as a square, an oval, and a triangle, and the second surface may have a profile in a shape of various regular or irregular patterns. The profile of the second surface may or may not be same as the contour of the first surface.

In an embodiment, reference may be made to FIG. 3 to FIG. 5. A side surface of the fixing portion 32 is recessed to form a groove 341, and the groove 341 forms an air channel for air to pass through. A distance between a groove bottom of the groove 341 and a central axis of the base body 31 may be greater than a distance between a corresponding single side of the base body 31 and the central axis of the base body 31. Therefore, the air flowing through the groove 341 contacts the fixing portion 32 to exchange heat, so as to be heated by the fixing portion 32. It may be understood that, in some embodiments, a partial surface of the base body 31 may form the groove bottom of the groove 341. Therefore, the air flowing through the groove 341 contacts the fixing portion and the base body 31 to exchange heat, so as to be heated by outer surfaces of the fixing portion 32 and the base body 31.

In a further embodiment, the groove 341 may be in a shape of a straight line extending in the axial direction of the heater. In another embodiment, the groove 341 may be in a shape of a snake or a broken line running through a proximal end and a distal end of the fixing portion 32. In another embodiment, the groove 341 may be in a shape of an oblique line, an arc, or a helix running through the fixing portion 32.

The "proximal end" and the "distal end" mentioned in the embodiments of this specification are relative to the user during use. The "proximal end" refers to an end close to the user, and the "distal end" refers to an end away from the user, which are not intended to limit this application.

In a further embodiment, a same groove 341 has a same width, so that air has a substantially same contact area with the groove 341 throughout the groove 341, thereby having a substantially same heat exchange efficiency.

Only one groove 341 may be provided. Preferably, the fixing portion 32 is provided with a plurality of grooves 341. The grooves 341 are uniformly distributed on the fixing portion 31, so that the air flowing through the fixing portion 32 can be uniformly heated. The uniform distribution herein includes the following: 1. All of the grooves 341 may have a substantially same size and shape. 2. At a same axial height of the heater 3, a spacing between two adjacent grooves 341 is the same as a distance between any other two adjacent grooves 341.

In a further embodiment, reference may be made to FIG. 3 to FIG. 6. The fixing portion 32 is constructed in an annular shape surrounding the base body 31, so that the grooves 341 formed on the fixing portion 32 are distributed on a periphery of the base body 31 in an annular shape, and may be uniformly distributed.

However, in some embodiments, the plurality of grooves 341 on the fixing portion may be non-uniformly distributed. Certainly, the fixing portion 32 may not form the annular shape, and may be one or more block-shaped bodies or arcuate bodies arranged on the surface of the base body 31. The grooves 341 are arranged on a surface of the block-shaped bodies or arcuate bodies.

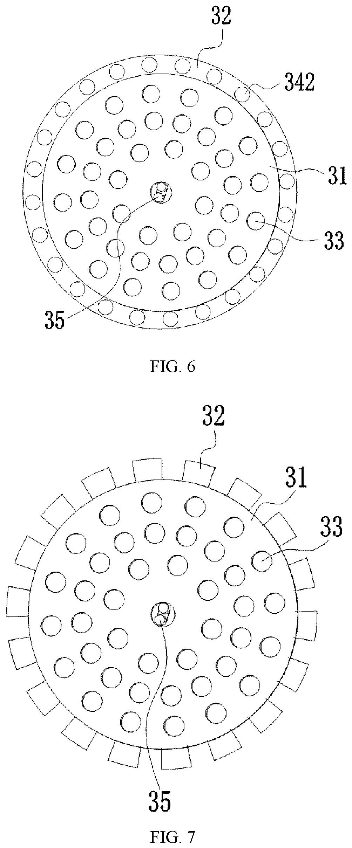

In an embodiment, reference may be made to FIG. 6. The fixing portion 32 may be run through by a second air hole 342 in the axial direction of the heater 3, and the second air hole 342 forms at least part of the air channel for air to pass through. Similar to the above, a plurality second air holes 342 may be provided. The plurality of second air holes 342 may be uniformly or non-uniformly distributed in the fixing portion 32. The fixing portion 32 may be constructed in an annular shape surrounding the base body 31, or the fixing portion 32 may be a block-shaped body or an arcuate body arranged on the side surface of the base body 31. Air contacts the fixing portion 32 when passing through the second air holes 342, so that the air exchanges heat with the fixing portion 32 to be heated. When a partial hole wall of each of the second air holes 342 is defined by the base body 31, the air in the second air hole 342 may be further heated by the base body 31. A diameter of the second air hole 342 may be less than a diameter of each of the first air holes 33.

In an embodiment, reference may be made to FIG. 7. A plurality of fixing portions 32 are arranged. At least two fixing portions are arranged. At least part of the air channel for air to pass through is formed between two adjacent fixing portions 32. Therefore, when the air passes through the air channel, the air simultaneously contacts the fixing portion 32 and the base body 31 to be simultaneously heated by the two.

It may be understood that the fixing portion 32 is optional rather than mandatory.

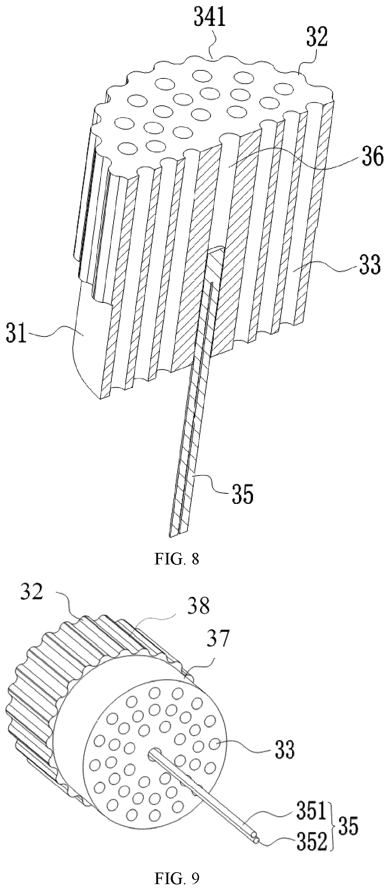

To help the controller 42 control the temperature of the heater 3, in the embodiments shown in FIG. 2 and FIG. 8, the heater 3 further includes a mounting hole 36 and a first temperature sensor 35. The first temperature sensor 35 is mounted in the mounting hole 36. The temperature of the heater 3 is measured through the first temperature sensor 35. Then the controller 42 obtains the temperature data, analyzes the temperature data, and finally controls the temperature of the heater 3.

When air flows through the heater 3, the air takes away the heat inside the heater 3, causing the temperature inside the heater 3 to change. However, a temperature of an outer surface of a side wall of the heater 3 does not significantly change when the air passes through the heater 3. The insignificant change may be caused by the following: 1. The periphery of the heater 3 is provided with a thermal insulation layer. The thermal insulation layer causes the temperature of the outer surface of the heater 3 to be relatively stable. 2. The heater mainly generates heat through the surface layer thereof, and therefore a temperature of the surface layer can be relatively constant without being affected by an internal temperature change during operation. To resolve a temperature measurement problem caused by arranging the first temperature sensor 35 on the surface of the heater, in this application, the first temperature sensor 35 is arranged inside the heater 3, to replace an existing solution of arranging the first temperature sensor 35 on the surface of the heater 3.

Reference may be made to FIG. 8. The mounting hole 36 is arranged inside the base body 31, and a measurement portion of the first temperature sensor 35 may be arranged in the mounting hole 36, to measure the temperature inside the base body 31.

In an embodiment, the mounting hole 36 is a blind hole that is provided inside the base body 31 and does not run through the base body 31, or the mounting hole 36 is a through hole with at least one end blocked, and therefore air cannot pass through the mounting hole 36. However, because the mounting hole 36 is provided inside the base body 31, and the measurement portion of the first temperature sensor 35 is arranged inside the mounting hole 36, when air passes through the first air holes 33 and causes the temperature inside the base body 31 to change, the first temperature sensor 35 can capture the temperature inside the base body 31 directly and accurately, and record or express the temperature inside the base body 31.

In an embodiment, the mounting hole 36 is a through hole running through the base body 31, and air still can pass through the mounting hole 36 after the first temperature sensor 35 is mounted, and therefore the air can pass through the mounting hole 36 and the first air holes 33 during inhalation, so that the mounting hole 36 and the first air holes 33 have a substantially same temperature change. In this way, the temperature data of the base body 31 obtained by the first temperature sensor 35 in the mounting hole 36 is closer to an actual temperature of the first air holes 33, which has higher reference value. Alternatively, the mounting hole 36 is formed by one of the first air holes 33, so that the first temperature sensor 35 located in the first air hole 33 can measure the temperature of the first air hole 33 when air flows therethrough.

In an embodiment, an air channel of the fixing portion 32 forms the mounting hole 36. Therefore, the first temperature sensor 35 located in the mounting hole 36 can measure a temperature of the air channel when air flows through the air channel.

Conventionally, the first temperature sensor 35 is arranged on the surface of the heater. When air rapidly flows through the air hole or the air channel of the heater during inhalation, the temperature of the air hole or the air channel significantly decreases due to direct contact with air with a lower temperature. However, since the surface of the heater, such as the surface of the base body, does not directly contact the cold air, the temperature of the surface of the heater does not change significantly in a short period of time during the inhalation. In this case, the first temperature sensor 35 has low measurement sensitivity.

Through the solution of this application, the temperature of the air in the first air hole 33 or the air channel can be obtained directly, quickly, and timely, so that the temperature data of the air can be obtained more accurately, which has high measurement sensitivity. The temperature data helps the controller 42 timely and accurately control the temperature of the heater 3, and can prevent over-baking of the aerosol generation product 1 as a result of an excessively high temperature. Alternatively, the temperature data helps timely increase a power supplied to the heater 3, so that the heater 3 quickly recovers to a target temperature required for a current puff, or to a target temperature required for a next puff, thereby helping improve user experience.

In a preferred embodiment, the first temperature sensor 35 is arranged in a central region of the base body 31. For example, the mounting hole 36 is provided at a center of the base body 31. Certainly, the first temperature sensor may alternatively be arranged in a region away from the center with dense airflows or with a large air flow rate. This is because a temperature change in the center, the region with dense airflows, or the region with a large air flow rate is more significant, and can more effectively reflect an actual temperature to be captured by the heater 3.

In a preferred embodiment, only one mounting hole 36 is provided, and only one first temperature sensor 35 may be arranged. Certainly, a plurality of first temperature sensors 35 may be arranged, and measurement portions thereof are all arranged in the mounting hole 36. Preferably, the measurement portions of the plurality of different first temperature sensors 35 are arranged at different positions in the mounting hole 36, for example, arranged at different axial depths of the mounting hole 36.

In a preferred embodiment, a plurality of mounting holes 36 may be provided, and a plurality of first temperature sensor 35 may be correspondingly arranged, which are respectively arranged in the plurality of different mounting holes 36, for example, arranged at a same axial depth in different mounting holes 36. In this way, temperature distribution information of the heater 3 or real-time average temperature data inside the heater 3 can be learned based on temperature data of the heater 3 obtained by the plurality of first temperature sensors 35, which helps the controller 42 control the temperature of the heater 3 more accurately.

To help mount the first temperature sensor 35 or avoid impact on the passage of the air through the mounting hole 36, preferably, a diameter of the mounting hole 36 is greater than a diameter of a first air hole 33 where the first temperature sensor 35 does not need to be mounted. Certainly, there is a possibility that the diameter of the mounting hole 36 is the same as the diameter of the first air hole 33.

Referring to FIG. 8, regardless of whether the mounting hole 36 allows air to pass through or does not allow air to pass through, a plurality of first air holes 33 may be distributed on a periphery of the mounting hole 36. For example, the plurality of first air holes 33 may surround the mounting hole 36, or the plurality of first air holes 33 may surround at least part of the mounting hole. Therefore, the mounting hole 36 is at a position allowing the mounting hole to be at least partially surrounded by an airflow during inhalation or in natural convection, or is at a center or an edge of a region with dense airflows. In this way, a temperature change of the plurality of first air holes 33 around the mounting hole 36 has large impact on a temperature change of the mounting hole. Preferably, the mounting hole 36 is uniformly surrounded by the plurality of first air holes 33, so that the mounting hole 36 has a uniform temperature field distribution, and the temperature data obtained by the first temperature sensor 35 is more reliable.

Preferably, the measurement portion of the first temperature sensor 35 is located in a middle of an axial length of the mounting hole 36.

In an embodiment, reference may be made to FIG. 3 and FIG. 4. The first temperature sensor 35 includes a first thermocouple wire 351 and a second thermocouple wire 352.

In a preferred embodiment, at least part of the base body 31 is composed of a conductive material. Preferably, the conductive material is arranged in the mounting hole 36. The first thermocouple wire 351 and the second thermocouple wire 352 are electrically connected to each other through the conductive material, to form a thermocouple configured to measure the temperature of the base body 31. The conductive material forms a measurement portion of the thermocouple.

Similarly, in another preferred embodiment, at least part of the fixing portion 32 is composed of a conductive material. Preferably, the conductive material is arranged in the air channel. The first thermocouple wire 351 and the second thermocouple wire 352 are electrically connected to each other through the conductive material, to form a thermocouple configured to measure the temperature of the fixing portion 32. The conductive material forms a measurement portion of the thermocouple.

In a further embodiment, the entire base body 31 is made of a conductive material, and/or the entire fixing portion 32 is made of a conductive material.

In a preferred embodiment, the first thermocouple wire 351 and the second thermocouple wire 352 are located in a same mounting hole 36. Certainly, there is a possibility that the first thermocouple wire 351 and the second thermocouple wire 352 are located in different mounting holes 36. Preferably, the diameter of the mounting hole 36 is greater than the diameter of a first air hole 33 having no couple wire accommodated therein, to allow air to pass through the mounting hole 36, or help arrange at least part of the first thermocouple wire 351 and the second thermocouple wire 352 in the mounting hole 36.

In a preferred embodiment, the first thermocouple wire 351 and the second thermocouple wire 352 are made of different couple wire materials. For example, the first thermocouple wire 351 and the second thermocouple wire 352 are respectively made of two different materials of couple materials such as nickel, a nickel-chromium alloy, a nickel-silicon alloy, nickel-chromium copper, constantan, and an iron-chromium alloy. In other words, the first thermocouple wire 351 and the second thermocouple wire 352 are made of different materials.

In an embodiment, reference may be made to FIG. 4. The first temperature sensor 35 is embedded in the base body 31 or the fixing portion 32. Specifically, the measurement portion of the first temperature sensor 35 may be arranged in the first air hole 33 or the second air hole 342 of the fixing portion 32, so that a temperature of the first air hole 33 or the second air hole 342 when air flows through the first air hole 33 or the second air hole 342 may be measured. In this way, a temperature of the heated air can be obtained more accurately. A temperature change of the air in the first air hole 33 or the second air hole 342 can be captured by the first temperature sensor 35 timely and directly. Conventionally, the first temperature sensor 35 is arranged on the surface of the heater 3. When air rapidly flows through the first air hole 33 or the second air hole 342 of the heater 3 during inhalation, the temperature of the first air hole 33 or the second air hole 342 significantly decreases due to direct contact with air with a lower temperature. However, since the surface of the heater 3, such as the surface of the base body 31, does not directly contact the cold air, the temperature of the surface of the heater 3 does not change significantly during the inhalation. In this case, the first temperature sensor 35 has low measurement sensitivity. Through the solution of this application, the temperature of the air in the first air hole 33 or the second air hole 342 can be obtained directly, quickly, and timely, so that the temperature data of the air can be obtained more accurately, which has high measurement sensitivity. The temperature data helps the controller 42 timely and accurately control the temperature of the heater 3, and can prevent over-baking of the aerosol generation product 1 as a result of an excessively high temperature. Alternatively, the temperature data helps timely increase a power supplied to the heater 3, so that the heater 3 quickly recovers to a target temperature required for a current puff, or to a target temperature required for a next puff, thereby helping improve user experience.

According to the heater and the aerosol generating device described above, the measurement portion of the first temperature sensor 35 is arranged in the mounting hole, to achieve arrangement of the measurement portion in the base body, so that the first temperature sensor 35 can measure a temperature change inside the base body. Compared with measuring the temperature of the surface of the base body, measuring the temperature inside the base body not only can reduce a measurement error caused by a temperature gradient, but also avoid impact of the thermal insulation layer arranged on the periphery of the heater. Since the measurement portion is arranged in the mounting hole, when air flows through the first air holes, the temperature inside the base body decreases. Therefore, when an air flow velocity and an air flow rate significantly increase during the inhalation of the user, the measurement portion can measure sensitively in real time the temperature change of the base body caused by the airflow change, thereby providing a more accurate and timely temperature parameter, which is quite beneficial to the temperature control of the heater.

In an embodiment, reference may be made to FIG. 9. The heater 3 includes a first portion 37 and a second portion 38. The first portion 37 and the second portion 38 are both run through by one or more first air holes 33. The first air holes 33 allow air to pass through. The air may be heated into hot air by the heater 3 when passing through the first air holes 33. The hot air enters the aerosol generation product 1, and flows through almost all gaps in the aerosol generation product 1 to fully and uniformly bake the aerosol generation product 1.

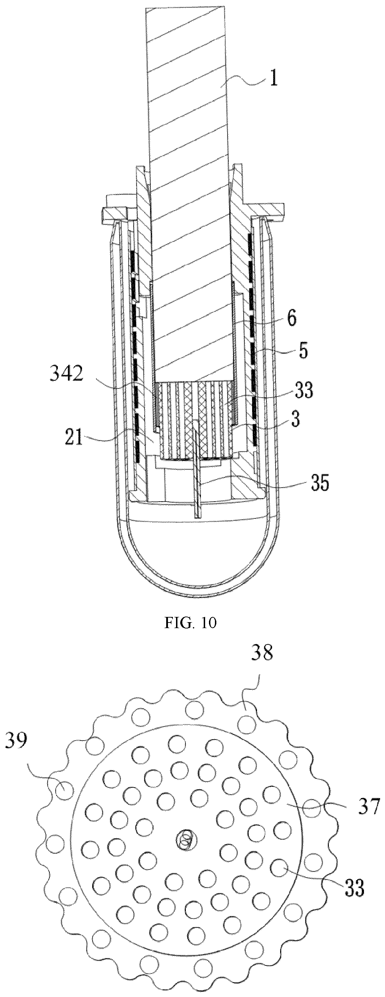

In an embodiment, a heating assembly is further provided. Reference may be made to FIG. 10. The heating assembly includes the heater 3 and a tubular member 6. The tubular member 6 is in a shape of a tube, and has a pass-through design for an upper end and a lower end. Air may flow from the lower end to the upper end. A part of the heater 3 is embedded in and fixed to the tubular member 6. The heater 3 is retained in the accommodating cavity of the aerosol generating device through the tubular member 6.

In an embodiment, the tubular member 6 is an electromagnetic heating member, a resistive heating member, an infrared heating member, a thermal insulation tube, or the like.

In an embodiment, reference may be made to FIG. 10. The second air holes 342 may alternatively be jointly defined by the tubular member 6 and the second portion 38. Air may enter the aerosol generation product 1 through the second air holes 342. The air is heated into hot air by at least the second portion 38 when passing through the second air holes 342.

In an embodiment, the second air holes 342 may be distributed uniformly. For example, the second air holes 342 may have a same diameter, any two adjacent second air holes 342 is spaced apart by a same distance, or each of the second air holes 342 has a constant diameter. However, this application is not limited thereto. In other words, the second air holes 342 may be distributed non-uniformly. Certainly, the second air holes 342 may be linear, curved, or bent.

In an optional embodiment, reference may be made to FIG. 9. A section of at least part of an outer side surface of the second portion 38 is in a shape of a gear or a lace. The at least part of the outer side surface of the second portion 38 in the shape of a gear or a lace is embedded in and fixed to the tubular member 6. In this way, an overlapping region in which the second portion 38 is embedded in the tubular member 6 allows air to pass through (in other words, the air passes through the second air holes 342). The air is heated into hot air by at least the outer side surface of the second portion 38 when passing through the overlapping region. Certainly, there is a possibility that a section of at least part of an inner side surface of tubular member 6 is in the shape of a gear or a lace, and the second portion 38 is embedded in and fixed to the at least part of the inner side surface of the tubular member 6 in the shape of a gear or a lace to define the second air holes 342.

In an embodiment, reference may be made to FIG. 9 and FIG. 10. In a hot air flowing direction, the second portion 38 is located downstream from the first portion 37. Therefore, when the heater 3 is embedded in and fixed to the tubular member 6, the first portion 37 protrudes from the tubular member 6.

In an embodiment, reference may be made to FIG. 9. A cross-sectional area of the second portion 38 is greater than a cross-sectional area of the first portion 37, to form a stepped surface between the second portion 38 and the first portion 37. A third air hole 39 is provided on the stepped surface. Air may pass through the third air hole 39 to enter the aerosol generation product 1. The third air hole 39 runs through only the second portion 38. The cross-sectional area of the first portion 37 may be arranged to be less than the cross-sectional area of the second portion 38 through various feasible processes such as cutting and casting. For example, a part of the first portion 37 run through by the third air hole 39 is cut off. In this way, an overall mass of the heater 3 is reduced. According to a heat formula of Q = CMΔT (Q represents heat absorbed or released by an object with a heat capacity C and a mass M in a temperature change of ΔT), in a case that a value of C of the object is constant and ΔT is the same, a smaller mass M leads to less heat absorbed or released by the object. Therefore, through the reduction of the mass of the heater 3, energy consumption of the heater 3 during heating can be reduced, thereby achieving energy consumption reduction.

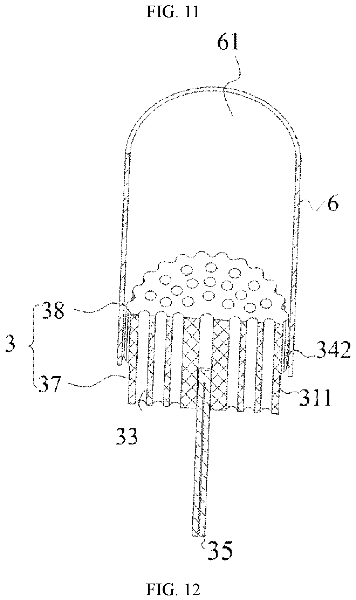

In an embodiment, as shown in FIG. 11, the heater 3 is provided with the first air hole 33, the second air hole 342, and the third air hole 39. In an embodiment, the heater 3 is provided with only the first air hole 33 and the second air hole 342. In other words, the stepped surface between the second portion 38 and the first portion 37 is discontinuous (as shown in FIG. 7). Therefore, at least partial profile of an outer side surface of the second portion 38 forms a gear not provided with the third air hole 39. Alternatively, the stepped surface between the second portion 38 and the first portion 37 has an excessively low height (as shown in FIG. 3 to FIG. 5), and therefore has no space for providing the third air hole 39. In this case, at least partial profile of the outer side surface of the second portion 38 is in a shape of a lace with a small amplitude.

In an embodiment, third air holes 39 are uniformly distributed on the stepped surface. For example, the plurality of third air holes 39 have a same diameter, or any two adjacent third air holes 39 are spaced apart by a same distance. However, this application is not limited thereto. In other words, the third air holes 39 may be distributed non-uniformly.

In a preferred implementation, at least one of the heating member 3 and the tubular member 6 includes stainless steel of grade 430 (SS430), stainless steel of grade 420 (SS420), an alloy material including iron and nickel (such as a permalloy) (such as a permalloy), or a magnetically inductive material that can generate heat in a varying magnetic field, such as a graphite alloy. Therefore, at least one of the tubular member 6 generates heat by generating an eddy current and hysteresis in the varying magnetic field, and heats the air flowing therethrough, to heat the aerosol generation product 1 through the air. Correspondingly, the aerosol generating device further includes a magnetic field generator 5, such as an induction coil, which is configured to generate a varying magnetic field under an alternating current. The controller 42 is connected to the battery core 41 and the induction coil, and can convert a direct current outputted by the battery core 41 into an alternating current. Preferably, a frequency of the alternating current ranges from 80 KHz to 400 KHz. More specifically, the frequency may range from about 200 KHz to 300 KHz.

In a preferred implementation, the tubular member 6 is made of a resistive conductive material such as an iron-chromium-aluminum alloy, a nickel-chromium alloy, a nickel-iron alloy, platinum, tungsten, silver, conductive ceramic, or a conductive material including at least one of the above, which can generate heat through an electrothermal effect of a resistor when energized, to heat the aerosol generation product 1, so that at least one component of the aerosol generation product 1 can volatilize to form an aerosol.

In an optional implementation, the tubular member 6 may not generate heat, and is mainly configured to provide thermal insulation to reduce a heat loss rate on the periphery of the heater 3, or to reduce a loss rate of the internal temperature of the aerosol generation product 1, which can achieve the energy consumption of the heater 3.

Specifically, the tubular member 6 may be located on only a periphery of the second portion 38, to provide thermal insulation for only the second portion 38. Alternatively,
a receiving cavity 61 is formed on the tubular member 6. A partial region of the receiving cavity 61 is configured to receive the aerosol generation product 1, and other regions may be configured to receive at least part of the second portion 38. Therefore, the tubular member 6 can provide thermal insulation not only for at least the second portion 38 of the heater 3, to reduce the energy consumption of the heater 3, but also for the aerosol generation product 1, to prevent the aerosol from condensing in the aerosol generation product 1 or avoid a waste as a result of the aerosol generation product 1 not being sufficiently baked. In addition, the tubular member 6 can retain the heater 3 in the aerosol generating device. Optionally, the tubular member 6 is made of a thermal insulation and thermal isolation material, such as ceramic. Optionally, a wall of the tubular member 6 is provided therein with a vacuum thermal isolation layer.

The tubular member 6 can generate heat, which may be an electromagnetic heating member, a resistive heating member, an infrared heating member, or the like. In an embodiment, the tubular member 6 generates heat to maintain a high temperature environment inside the second accommodating cavity 61, to prevent a failure of sufficiently baking the aerosol generation product 1 as a result of the temperature of the hot air in the aerosol generation product 1 decreasing, and prevent the aerosol from condensing in the aerosol generation product 1. In another embodiment, the tubular member 6 is configured to operate at a high power when a user starts to inhale the aerosol generation product 1, to rapidly heat the aerosol generation product 1, so that the aerosol generation product 1 can rapidly generate an aerosol to meet a demand for rapid smoke/vapor generation of the user, thereby improving user experience. In a further embodiment, after the demand for rapid smoke/vapor generation of the user during a first puff is met, the tubular member 6 may enter a low-power operating state to help another heater, such as an air heater, maintain a high-temperature environment inside the aerosol generation product 1, so as to prevent the temperature of the air inside the aerosol generation product 1 from decreasing excessively. In still another embodiment, the heating assembly 3 includes only the tubular member 6. The aerosol generation product 1 inside the heating assembly is heated to generate an aerosol through the tubular member 6. In another embodiment, the tubular member 6 may be a thermal insulation tube, which is mainly configured to provide thermal insulation for the aerosol generation product 1, to prevent a temperature of an airflow in the aerosol generation product 1 from decreasing excessively quickly.

When the heater 3 and the tubular member 6 both include stainless steel of grade 430 (SS430), stainless steel of grade 420 (SS420), an alloy material including iron and nickel (such as a permalloy), or a magnetically inductive material that can generate heat in a varying magnetic field, such as a graphite alloy, the magnetically inductive material can generate an eddy current and hysteresis in the varying magnetic field, to generate heat. Therefore, the heater 3 and the tubular member 6 can generate heat in the varying magnetic field. Since at least part of the second portion 38 is located in the tubular member 6 or at least part of the fixing portion is located in the tubular member 6, the at least part of the fixing portion may be magnetically shielded by the tubular member 6, and therefore cannot generate an eddy current (in this case, a magnetic induction generator generating the varying magnetic field is located on a periphery of the heating assembly, and it may be understood that if the magnetic induction generator generating the varying magnetic field is located on an inner side of the heating assembly, a part of the tubular member 6 may be magnetically shielded by the heater 3). In this case, a temperature of the second portion 38 and a temperature of the base body 31 on an inner side of the second portion 38 can be increased through heat conduction. A heat source of the heat conduction is the tubular member 6 in the overlapping region and the base body 31 exposed from the tubular member 6. Therefore, the partial magnetic shielding does not affect a heating effect of the air flowing through the fixing portion.

In an embodiment, in the hot air flowing direction, the second portion 38 is located upstream from the first portion 37. Therefore, when the heater 3 is embedded in and fixed to the tubular member 6, the first portion 37 is located inside the tubular member 6 if the tubular member 6 has a sufficiently length, and at least part of the first portion 37 may be exposed from the tubular member 6 if the tubular member 6 has a short axial length.

In an optional implementation, the heater 3 is integrally formed, so that the first portion 37 and the second portion 38 have a substantially same heating efficiency in a unit area or unit volume. In another embodiment, the first portion 37 and the second portion 38 are formed separately using different materials and then combined into an integral structure, so that the first portion 37 and the second portion 38 have different heating efficiencies in a unit area or unit volume.

In some optional embodiments, the first portion 37 and the second portion 38 both have a circular profile. In another optional embodiment, the first portion 37 may have a profile in a shape of a regular or irregular pattern such as a square, an oval, and a triangle, and the second portion 38 may have a profile in a shape of various regular or irregular patterns. The profile of the second surface may or may not be same as the contour of the first portion 37.

In an embodiment, the heater 3 is embedded in and connected to the tubular member 6 through the fixing portion 32. At least part of the fixing portion 32 is located in the receiving cavity 61 of the tubular member 6. In other words, at least part of the fixing portion 32 is located in an overlapping region of the heater 3 and the tubular member 6.

In an embodiment, reference may be made to FIG. 9. The second portion 38 is embedded in and fixed to the tubular member 6 through the fixing portion 32, so that the first portion 37 protrudes from the tubular member 6. In addition, since at least part of the fixing portion 32 is embedded in the tubular member 6, an overlapping region exists between the fixing portion 32 and the tubular member 6. The fixing portion 32 may be arranged on the second portion 38, or the fixing portion 32 may be connected to the second portion 38 and the first portion 37.

Reference is made to FIG. 3 to FIG. 5. The groove 341 and an inner wall of the tubular member 6 j ointly define the second air hole 342. Therefore, when the air passes through the second air hole 342, the air simultaneously contacts the fixing portion 32 and the tubular member 6 to be simultaneously heated by the two. When a plurality of fixing portions 32 are arranged and a second air hole 342 is provided between two adjacent fixing portions 32, reference may be made to FIG. 7. When the air passes through the second air hole 342, the air simultaneously contacts the fixing portion 32, the base body 31, and the tubular member 6 and is simultaneously heated by the three.

In another embodiment, the fixing portion 32 is arranged on the first portion 37 of the base body 31, so that the entire heater 3 is located in the receiving cavity 61 of the tubular member 6, or only a part of the fixing portion 32 and the base body 31 on an inner side of the fixing portion 32 are exposed from the tubular member 6.

In another embodiment, the fixing portion 32 is connected to the first portion 37 and the second portion 38. Apart of the heater 3 is exposed from the tubular member 6, and a part is located inside the tubular member 6.

According to the heating assembly and the aerosol generating device described above, the heater 3 is configured to heat the air entering the receiving cavity 61 inside the tubular member 6. The tubular member 6 is configured to maintain the high temperature environment of the receiving cavity 61, to prevent the temperature of the air from decreasing excessively when the air flows in the aerosol generation product in the receiving cavity 61, which helps the air bake the aerosol generation product more sufficiently, and prevent the aerosol from condensing in the aerosol generation product.

According to the heating assembly and the aerosol generating device described above, the partial cross-sectional area of the heater 3 is reduced through various processes such as cutting and casting. To be specific, the cross-sectional area of the first portion 37 is arranged to be less than the cross-sectional area of the second portion 38. In this way, the overall mass of the heater 3 can be effectively reduced, and the energy consumption required for the heater 3 to rise to a preset temperature can be reduced, which helps improve a thermal mass of the heater 3. Since a part of the heater 3 is embedded in and fixed to the tubular member 6, not only the heater 3 can be retained in the aerosol generating device through the tubular member 6, but also a contact area between the heater 3 and the tubular member 6 can be reduced, and a thermal resistance between the tubular member 6 and the heater 3 can be increased, which can further reduce heat losses and reduce the energy consumption.

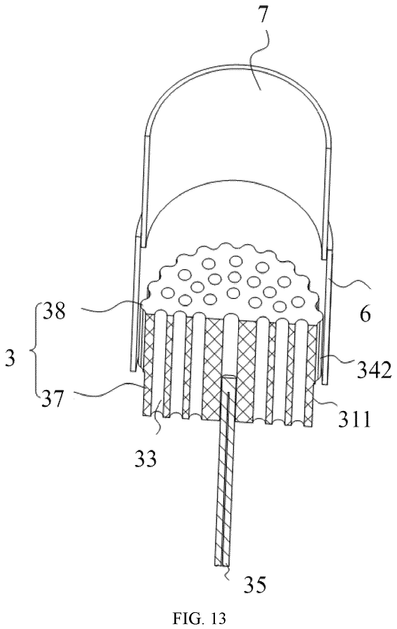

In an embodiment, reference may be made to FIG. 13. The heating assembly further includes an auxiliary heating member 7. In the hot air flowing direction, the auxiliary heating member 7 is located downstream from the heater 3, and the auxiliary heating member 7 and the heater 3 are both embedded in and fixed to the tubular member 6. The auxiliary heating member 7 is an electromagnetic heating member, a resistive heating member, an infrared heating member, a thermal insulation tube, or the like. The auxiliary heating member 7 can increase an axial length of the receiving cavity, to adapt to a longer cigarette.

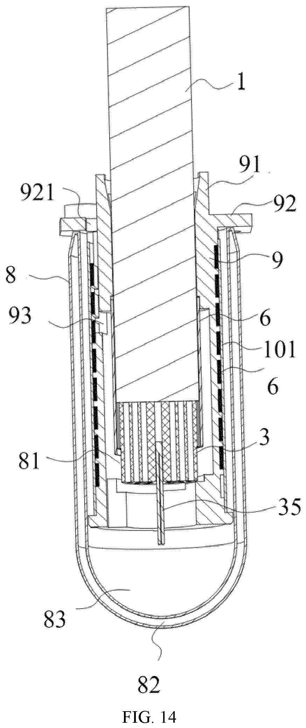

In an embodiment, a heating module is further provided. Reference may be made to FIG. 14. The heating module includes the heating assembly and a thermal insulation housing 8. The heating assembly may include a single heater 3. Alternatively, the heating assembly may include more than one heater 3. The single heater 3 or the plurality of heaters 3 may be properly arranged to heat the aerosol generation product 1 most efficiently. The plurality of heaters 3 may be configured to heat the aerosol generation product 1 section by section. At least two of the plurality of heaters 3 may have different heating modes or heating efficiencies.

Still referring to FIG. 14, the thermal insulation housing 8 has a first accommodating cavity 81 formed therein. At least part of the aerosol generation product 1 may be accommodated in the first accommodating cavity 81. A proximal end of the thermal insulation housing 8 is provided with a first insertion port that is in communication with the first accommodating cavity 81. At least part of the aerosol generation product 1 needs to pass through the first insertion port to enter the first accommodating cavity 81. A distal end of the thermal insulation housing 8 is sealed.

The heating assembly is arranged in the first accommodating cavity 81, which generates heat in the first accommodating cavity 81 to heat the aerosol generation product 1, thereby generating an aerosol. The thermal insulation housing 8 has thermal insulation and thermal isolation functions. A side wall of the thermal insulation housing is located on a lateral periphery of the heating assembly, and the distal end (a bottom) thereof is located below the heating assembly and is sealed, so that more sufficient thermal insulation can be provided for the heating assembly, which helps further reduce energy consumption of the heating module.

In an embodiment, reference may be made to FIG. 14. The distal end of the thermal insulation housing 8 is an arched bottom 82 protruding outward. Compared with a flat bottom, the arched bottom 82 can accommodate a thicker air layer, so that heat transfer to the thermal insulation housing 8 can be more effectively prevented by thicker air, thereby prolonging thermal insulation time.

Preferably, the arched bottom 82 is configured to reflect an infrared ray. In an embodiment, an inner side of the arched bottom 82 is provided with an infrared reflective layer. The infrared reflective layer is made of a bright material such as aluminum foil or nickel foil, or is a film plated with metal, such as a gold-plated film or a silver-plated film. The infrared ray is reflected by the arched bottom 82 to block heat transfer toward outside, to retain heat in the first accommodating cavity 81, thereby enhancing thermal insulation for the heating assembly. Moreover, compared with the flat bottom, the arched bottom 82 has a larger infrared reflection area, which has a better thermal insulation effect.

Further, at least part of the heating module is exposed to a reflection range of the arched bottom 82. Alternatively, after the aerosol generation product 1 is accommodated in the first accommodating cavity 81, at least part of the aerosol generation product is exposed to the reflection range of the arched bottom 82. In this way, the infrared ray reflected by the arched bottom 82 can be incident onto the heating assembly or the aerosol generation product 1, so that the reflected infrared ray can heat up the heating assembly or the aerosol generation product 1, thereby achieving energy conservation. Preferably, a radian of the arched bottom 82 is set in such a way that infrared rays reflected by the arched bottom converge on the heating assembly or the aerosol generation product 1. Since the distal end of the thermal insulation housing 8 is arranged in the arch shape protruding outward, the infrared rays emitted by the thermal insulation housing can be more concentrated. Preferably, the thermal insulation housing 8 is an integral structure, so that the side wall and the bottom thereof are seamlessly connected. In this way, the arched bottom 82 can seal the distal end of the thermal insulation housing 8 more effectively, diffuse reflection inside the thermal insulation housing 8 can be reduced, a concentration degree of the reflected rays can be improved, and an excessively high local temperature as a result of heat gathering at a seam can be avoided.

In some embodiments, the infrared reflective layer may be further arranged on an inner side or an outer side of the side wall of the thermal insulation housing 8, to enhance thermal insulation of the side wall of the thermal insulation housing 8.

In an embodiment, reference may be made to FIG. 14. The thermal insulation housing 8 is made of a thermal insulation material. Further, a wall of the thermal insulation housing 8 is provided therein with a vacuum interlayer. For example, a wall of the arched bottom 82 is provided therein with a vacuum interlayer, and/or the side wall of the thermal insulation housing 8 is provided therein with a vacuum interlayer, to enhance thermal insulation and thermal isolation through the vacuum interlayer.

In still another embodiment, the heating assembly includes only the tubular member 6. The aerosol generation product 1 inside the heating assembly is heated to generate an aerosol through the tubular member 6. In another embodiment, the tubular member 6 may be a thermal insulation tube, which is mainly configured to provide thermal insulation for the aerosol generation product 1, to prevent a temperature of an airflow in the aerosol generation product 1 from decreasing excessively quickly.

The first accommodating cavity 81 is provided therein with an airflow channel. When the aerosol generation product 1 is inhaled, the air in the first accommodating cavity 81 enters the receiving cavity 61 of the tubular member 6 through the distal end of the tubular member 6 along the airflow channel.

The airflow channel in the first accommodating cavity 81 includes a first airflow channel and a second airflow channel. Partial air in the first accommodating cavity 81 flows to the first air hole 33 through the first airflow channel and enters the receiving cavity 61 through the first air hole 33. The distal end of the thermal insulation housing 8 defines a convex air cavity 83. The convex air cavity 83 forms a part of the first airflow channel, and the convex air cavity 83 may be located directly below the first air hole 33. At least part of the second airflow channel is arranged to surround an outer side surface of the tubular member 6. Partial air in the first accommodating cavity 81 flows from the proximal end of the tubular member 6 to a distal end of the second air hole 342 along an outer side wall of the first airflow channel against the tubular member 6, and enters the receiving cavity 61 through the second air hole 342. When the tubular member 6 generates heat, the side wall thereof can heat the air in the second airflow channel. The air in the second airflow channel can fully use residual heat of the tubular member 6. In other words, at least partial air of the first airflow channel flows from the proximal end of the thermal insulation housing 8 to the distal end thereof, passes through the convex air cavity 83, then passes through the heating member 3, and finally enters the receiving cavity 61 in the tubular member 6.

Further, the second airflow channel is provided against the outer side surface of the tubular member 6, to make full use of the residual heat of the tubular member 6.

In an embodiment, the first air hole 33 is in communication with the distal end of the second air hole 342. Most of the air flowing out of the first airflow channel enters the receiving cavity 61 through the first air hole 33, and partial air enters the receiving cavity 61 through the second air hole 342. Similarly, most of the air flowing out of the second airflow channel enters the receiving cavity 61 through the second air hole 342, and partial air enters the receiving cavity 61 through the first air hole 33.

Referring to FIG. 14, the heating module further includes a support 36. At least part of the support 36 is arranged in the first accommodating cavity 81, and the support 36 is connected to the thermal insulation housing 8. The heating assembly is connected to the support 9, and is retained in the first accommodating cavity 81 by the support 9. A side wall of the support 9 and the side wall of the thermal insulation housing 8 define a part of the first airflow channel. The side wall of the support 9 and the tubular member 6 define at least part of the second airflow channel. Therefore, the first airflow channel and the second airflow channel are at least partially separated by the side wall of the support 9.

In an embodiment, reference may be made to FIG. 14. A second insertion port 91 is formed on a proximal end of the support 9. At least part of the second insertion port 91 is located in the first insertion port, or the second insertion port 91 is in communication with the first insertion port. The aerosol generation product 1 needs to pass through the second insertion port 91 to enter the first accommodating cavity 81.

The support 9 further includes a shoulder 92 and a support body. The shoulder 92 is arranged around the second insertion port 91, and is connected to the support body of the support and the thermal insulation housing 8, so that at least part of the first accommodating cavity 81 is defined by the thermal insulation housing 8 and the shoulder 92. The shoulder 92 and the thermal insulation housing 8 may be an integral structure. Alternatively, the shoulder 92 and the support body may be integrally injection molded. Alternatively, the shoulder 92 and the support body may be separately injection molded and then assembled into an integral structure.

A first air vent 921 is provided on the shoulder 92. The air enters the first accommodating cavity 81 through the first air vent 371. In other words, the first air vent 921 is provided on a proximal end of the heating module. Specifically, the first air vent 921 may be provided corresponding to the first airflow channel, and is in communication with the first airflow channel. A second air vent 93 is provided on the side wall of the support 9, and the second air vent 93 is in communication with the first airflow channel and the second airflow channel. Alternatively, the first air vent 921 may be provided corresponding to the second airflow channel, and is in communication with the second airflow channel. The second air vent 93 is provided on the side wall of the support 9, and the second air vent 93 is in communication with the first airflow channel and the second airflow channel. In this way, the air entering the first accommodating cavity 81 through the first air vent 921 can enter the first airflow channel and the second airflow channel. In other words, partial air in the first airflow channel is shunted into the second airflow channel through the second air vent 93, and the second air vent 93 is located on the side wall of the support 9. Therefore, the air shunted into the second airflow channel still flows from the proximal end of the tubular member 6 to the distal end thereof.

Further, referring to FIG. 14, the second air vent 93 is provided corresponding to the proximal end of the tubular member 6.

When the heating assembly includes a magnetically inductive material that can generate heat in the varying magnetic field, the heating module further includes a magnetic induction generator (the magnetic field generator 5). The magnetic induction generator is wound on an outer side of the support 9, and is retained in the first accommodating cavity 81 through the support 9. Referring to FIG. 14, the magnetic induction generator is located between the support 9 and the thermal insulation housing 8.

In an embodiment, the heating module further includes a shielding layer 101. The shielding layer 101 is arranged on a periphery of the magnetic induction generator. The shielding layer 101 is located in the first accommodating cavity 81, and is located between the thermal insulation housing 8 and the magnetic induction generator (the magnetic field generator 5). The shielding layer 101 is a magnetic shielding layer, which is configured to prevent a leakage of a magnetic field generated by the magnetic induction generator, so that the magnetic field can be more concentrated on the magnetically inductive material, thereby improving a utilization of the magnetic field and improving heating efficiency of the magnetically inductive material.

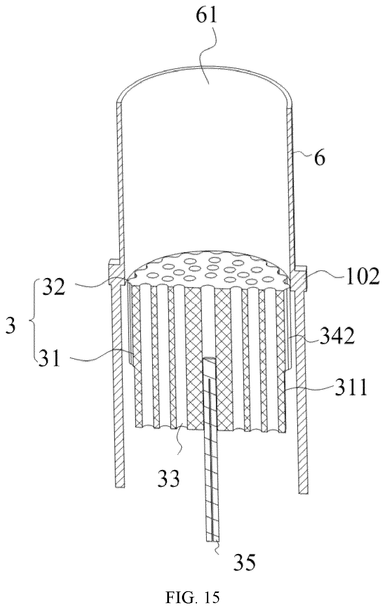

Reference may be made to FIG. 15. A second temperature sensor 102 may be further arranged to measure the temperature of the tubular member 6. The second temperature sensor 102 may be connected to an outer surface of the side wall of the tubular member 6, and is connected to the controller 42. The controller 42 controls the temperature of the tubular member 6 based on temperature data measured by the second temperature sensor 102. In the embodiment shown in FIG. 15, the tubular member 6 does not overlap the heater 3.

The heating module further includes a lead electrically connected to the magnetic induction generator, the heating assembly, or the temperature sensor. The lead passes through the first airflow channel or the second airflow channel, and is then led out through the first air vent 921. In other words, the first air hole 33 not only allows the air to enter the first accommodating cavity 81, but also allows the lead in the first accommodating cavity 81 to be threaded out to be electrically connected to the controller 41.

Alternatively, the heater 3 and the tubular member 6 are made of different magnetically inductive materials, so as to have different heat generation efficiencies in a same varying magnetic field.

Alternatively, the tubular member 6 is discontinuously provided in an axial direction of the first accommodating cavity 81. In other words, the tubular member 6 may include a plurality of magnetic susceptor rings distributed in the axial direction. Two adjacent magnetic susceptor rings are not connected to each other, and different magnetic susceptor rings may correspond to different magnetic induction generators. In this way, the controller 42 causes the tubular member 6 to heat the aerosol generation product 1 section by section by controlling operating order or operating powers of the different magnetic induction generators. Certainly, the magnetic susceptor rings may be placed in a same varying magnetic field, and may be made of a same material or different materials.

According to the heating module and the aerosol generating device described above, the thermal insulation housing 8 has a structure in which the proximal end is provided with the first insertion port and the distal end is sealed, and the heating assembly is arranged in the thermal insulation housing 8, so that the heating assembly generates heat within the thermal insulation housing 8, and the heat is retained within the thermal insulation housing 8, which can provide more effective thermal insulation for the heating assembly, thereby reducing power consumption of the heating module.

It should be noted that, although the specification of this application and the drawings thereof provide the preferred embodiments of this application, this application is not limited to the embodiments described in this specification. Further, a person of ordinary skill in the art may make improvements or modifications according to the above descriptions, and all of the improvements and modifications shall fall within the protection scope of the appended claims of this application.

## Claims

1. A heater, configured to heat air flowing therethrough to form hot air and heat an aerosol generation product through the hot air, comprising:
a base body, wherein a plurality of first air holes run through the base body, the first air holes allow air to pass through, and the air is heated by the base body when flowing through the first air holes;
a mounting hole, provided in the base body; and
a first temperature sensor, wherein a measurement portion thereof is arranged in the mounting hole to measure a temperature inside the base body.

2. The heater according to claim 1, wherein:
the mounting hole is a through hole allowing air to pass through;
the mounting hole is a blind hole; or
the mounting hole is a through hole with at least one end blocked.

3. The heater according to claim 1, wherein the mounting hole is located at a center of the base body.

4. The heater according to claim 1, wherein the plurality of first air holes are uniformly distributed around the mounting hole.

5. The heater according to claim 1, wherein the mounting hole has a larger diameter than the first air holes.

6. The heater according to claim 1, wherein:
the base body comprises a conductive material, the first temperature sensor comprises a first thermocouple wire and a second thermocouple wire, and the first thermocouple wire and the second thermocouple wire are made of different materials; and
the conductive material is arranged as at least part of the measurement portion, and the first thermocouple wire and the second thermocouple wire are electrically connected through the base body, to form a thermocouple configured to measure the temperature inside the base body.

7. The heater according to claim 6, wherein:
only one mounting hole is provided, and the first thermocouple wire and the second thermocouple wire are at least partially located in the mounting hole; or
a plurality of mounting holes are provided, and the first thermocouple wire and the second thermocouple wire are at least partially located in different mounting holes.

8. The heater according to claim 1, wherein:
the base body is made of a resistive conductive material, to generate heat through an electrothermal effect;
the base body is made of a magnetically inductive material, to generate heat in a varying magnetic field; or
the base body comprises a heat conducting member and a heat generating member, the heat generating member is configured to generate heat and is arranged on a periphery of or inside the heat conducting member, and the first air holes run through the heat conducting member.

9. The heater according to claim 1, wherein the measurement portion is located in a middle of an axial length of the mounting hole.

10. The heater according to claim 1, wherein the base body comprises a graphite alloy.

11. A heating assembly, comprising:
a tubular member; and
the heater according to any of claims 1 to 10, wherein the heater comprises a fixing portion arranged on at least part of a side surface of the base body, and the base body is embedded in and connected to the tubular member through the fixing portion.

12. The heating assembly according to claim 11, wherein the base body comprises a first portion and a second portion, the first portion and the second portion are arranged in parallel in an axial direction of the heater, and the fixing portion is arranged on the second portion, or the fixing portion is connected to the second portion and the first portion.

13. The heating assembly according to claim 12, wherein the first portion protrudes from the tubular member.

14. The heating assembly according to claim 12, wherein a cross-sectional area of the first portion is less than a cross-sectional area of the second portion.

15. The heating assembly according to claim 12, wherein in a hot air flowing direction, the second portion is located downstream from the first portion.

16. The heating assembly according to claim 12, wherein the fixing portion and the tubular member jointly define a second air hole.

17. The heating assembly according to claim 12, wherein a section of at least part of an outer side surface of the second portion is in a shape of a gear or a lace, and the at least part of the outer side surface of the second portion in the shape of a gear or in a lace is embedded in and fixed to the tubular member.

18. The heating assembly according to claim 12, wherein a stepped surface is formed between the second portion and the first portion, a third air hole is provided on the stepped surface, and the third air hole runs through only the second portion.

19. The heating assembly according to claim 11, wherein the tubular member is an electromagnetic heating member, a resistive heating member, an infrared heating member, or a thermal insulation tube.

20. The heating assembly according to claim 12, wherein a receiving cavity configured to receive an aerosol generation product is formed in the tubular member, and at least part of the second portion is located in the receiving cavity.

21. The heating assembly according to claim 11, further comprising an auxiliary heating member, wherein:
in a hot air flowing direction, the auxiliary heating member is located downstream from the heater, and the auxiliary heating member and the heater are jointly embedded in and fixed to the tubular member; and
the auxiliary heating member is an electromagnetic heating member, a resistive heating member, an infrared heating member, or a thermal insulation tube.

22. A heating module, comprising:
a thermal insulation housing, having a first accommodating cavity formed therein, wherein the first accommodating cavity is configured to accommodate at least part of an aerosol generation product, and a first insertion port in communication with the first accommodating cavity is provided on a proximal end of the thermal insulation housing; and
the heating assembly according to any of claims 11 to 21, arranged in the first accommodating cavity and configured to heat the aerosol generation product to generate an aerosol,
wherein a distal end of the thermal insulation housing is sealed.

23. The heating module according to claim 22, wherein the distal end of the thermal insulation housing is an arched bottom protruding outward.

24. The heating module according to claim 22, wherein the thermal insulation housing is an integral structure.

25. The heating module according to claim 23, wherein the arched bottom is configured to reflect and converge infrared rays.

26. The heating module according to claim 25, wherein at least part of the heating assembly is exposed to a reflection range of the arched bottom; or at least part of the aerosol generation product is exposed to the reflection range of the arched bottom after the aerosol generation product is accommodated in the first accommodating cavity.

27. The heating module according to claim 22, wherein a side wall of the thermal insulation housing is provided therein with a vacuum interlayer.

28. The heating module according to claim 22, wherein:
a first air vent is provided on a proximal end of the heating module to allow air to enter the first accommodating cavity;
a convex air cavity is defined at a bottom of the thermal insulation housing; and
the first accommodating cavity is provided therein with a first airflow channel, at least partial air in the first airflow channel flows from the proximal end of the thermal insulation housing toward a distal end thereof, then passes through the convex air cavity, and finally enters the receiving cavity in the tubular member.

29. The heating module according to claim 28, further comprising a second airflow channel, wherein:
the second airflow channel is arranged against an outer side surface of the tubular member; and
part of the air in the first airflow channel is shunted into the second airflow channel through a second air vent, and flows along a proximal end of the tubular member to a distal end thereof.

30. The heating module according to claim 29, wherein the air in the second airflow channel enters the receiving cavity through the second air hole.

31. The heating module according to claim 22, further comprising a support, wherein:
the support comprises a shoulder or a support body;
the shoulder is connected to the thermal insulation housing, to jointly define the first accommodating cavity; and
the heating assembly is fixed to the support body and retained in the first accommodating cavity.

32. The heating module according to claim 31, wherein an air vent for air to enter the first accommodating cavity and/or a threading hole for a lead of the heating module to pass through is provided on the shoulder.

33. The heating module according to claim 31, wherein:
the heating assembly further comprises a magnetically inductive material configured to generate heat in a varying magnetic field; and
the heating module further comprises a magnetic field generator, and the magnetic field generator is wound on an outer side of the support.

34. The heating module according to claim 33, further comprising a shielding layer, wherein the shielding layer is arranged in the first accommodating cavity and is located on a periphery of the magnetic field generator.

35. An aerosol generating device, comprising the heater according to any of claims 1 to 10, the heating assembly according to any of claims 11 to 21, or the heating module according to any of claims 22 to 34.
